# EUROPEAN PATENT SPECIFICATION

(11) **EP 0 612 346 B1**
(45) Date of publication and mention of the grant of the patent: **14.06.1995**
(21) Application number: 92923333.6
(22) Date of filing: 06.11.1992
(51) Int. Cl.: C11B 5/00, C11B 3/10, A23D 9/00, C09K 15/06

(54) **STABILIZATION OF MARINE OILS**
FISCHÖLSTABILISIERUNG
STABILISATION D'HUILES MARINES

(30) Priority: 15.11.1991 GB 9124267; 08.05.1992 GB 9210012
(43) Date of publication of application: 31.08.1994
(73) Proprietor: F. HOFFMANN-LA ROCHE AG, 4002 Basel (CH)
(72) Inventor: KOSCHINSKI, Ingo, D-7890 Waldshut-Tiengen (DE); MACFARLANE, Neil Garden House, North Humberside HU15 1HP (GB)
(74) Representative: Kellenberger, Marcus, Dr.
(86) International application number: EP9202543
(87) International publication number: WO9310207

(56) References cited:
- EP-A- 0 304 115
- EP-A- 0 326 829
- EP-A- 0 340 635
- WO-A-91/10367
- GB-A- 558 922
- GB-A- 1 522 149
- US-A- 2 464 927
- US-A- 5 006 281

## Description

The present invention relates to the stabilization or marine oils, more particularly of fully or partially refined marine oils.

Marine oils have attracted substantial interest as a source of long-chain polyunsaturated fatty acids, particularly eicosapentaenoic acid (EPA), docosapentaenoic acid (DPA) and docosahexaenoic acid (DHA), which are considered to be of dietary significance. These fatty acids contain 5 or 6 double bonds, which render them prone to atmospheric oxidation. It is believed that the peroxides produced in this oxidation break down to secondary oxidation products, which exhibit a pronounced taste and smell of fish.

It has been known for a long lime that refined marine oil is initially free from a taste and smell of fish, but that reversion through oxidation occurs rapidly. Attempts have been made to stabilize the oil by the addition of α-tocopherol or mixed tocopherols at a level of 0.1%, but this has resulted only in a short term improvement in stability, i.e. a few days. Stabilization with tetrabutylhydroquinone has also been proposed, but this is of very restricted application having regard to the extremely bitter taste of this compound.

There has accordingly been a need for a process by means of which such marine oil can be stabilized over a long period in a simple and economical manner.

It has now surprisingly been found in accordance with the present invention that fully or partially refined marine oil can be stabilized over a longer period than hitherto, particularly over several months, by treating the oil with silica and incorporating a lecithin. ascorbyl palmitate and a tocopherol in the thus-treated oil.

The present invention is, based on the foregoing finding and is accordingly concerned with an improved process for the stabilization of fully or partially refined marine oil, by means of lecithin, ascorbyl palmitate and a tocopherol and involving a silica treatment, comprising treating said oil with silica having a surface area greater than 500 m² per gram, subjecting said silica treated oil to a soft vacuum steam deodorization at a temperature between about 140°C and about 210°C, and incorporating a lecithin, ascorbyl palmitate and a tocopherol in the ratio of 6-3 : 4-2 : 8-4 in the thus-treated oil, whereby the stabilization brought about lasts for several months.

The partially purified marine oil used in the present invention is one which has been neutralized and bleached in a conventional manner and the fully refined marine oil, also used in the present invention, is one which has been subjected to the additional step of deodorization, likewise in a conventional manner, It is preferred to use a fully refined marine oil in the present invention. The oil can be, for example, herring oil, anchovy oil, sardine oil, menhaden oil, pilchard oil, shark oil, hake oil etc. or a blend of one or more of these oils.

The silica used in the present invention can be any conventional silica such as, for example, those available as Trisyl and Trisyl 300 (Grace), Britesorb (Akzo) or SD959, SD1027 and Sorbsil C60 (Crosfield). It is preferred to use a silica which is dried or substantially freed from water before or during the process, i.e. which preferably has a water content of up to about 2%, preferably up to about 1%, The drying of the silica can be achieved, for example, by heating at about 100°C for about 3 hours. Alternatively, the silica can be dried in heated oil under a vacuum or by azeotropic distillation.

The treatment of the oil with silica can suitably be carried out in one embodiment by contacting the oil with the silica in a silica-filled column or stirred reactor vessel or a combination thereof. Batch, semi-batch or continuous operation is feasible. Silica having a surface area of more than 500 m² per gram is used. It is preferred to carry out this treatment at about room temperature, although lower or, especially, higher temperatures may also be used if desired. Further, it is preferred to perform this embodiment under the atmosphere of an inert gas, especially nitrogen. The contact time between the oil and the silica can be varied within wide limits and can be a few seconds to several days. In this connection, the flow rate at which the oil passes through the silica in a column procedure will depend on factors such as the type and particle size of the chosen silica, the dimensions of the column and the like.

In another embodiment, an oil/solvent miscella is passed through a silica column. The solvent is preferably a food grade approved apolar solvent, preferably a hydrocarbon and especially hexane This embodiment can be carried out e.g. by dissolving the oil in the solvent to provide a solution containing about 20-60%, preferably 33%, oil by weight, passing the solution through silica in a column or stirred reactor vessel or a combination thereof using a ratio of miscella to silica of 20:1 to 5:1, preferably 15:1, (wt./wt.), filtering and then removing the solvent by distillation. Here again, the contact time between the oil and the silica can be varied within wide limits and can be a few seconds to several days.

The treatment with silica described hereinbefore can also be carried out in the presence of carbon. The carbon which is used is preferably dried or substantially freed from water before or during the process and, furthermore, preferably has a surface area of more than 1100 m² per gram. Examples of suitable carbons are those available as Norit, e.g. Norit CA1, and similar activated carbons.

In the next stage of the process a lecithin, ascorbyl palmitate and a tocopherol are incorporated in the silica-treated oil.

Any food-grade or cosmetic-grade lecithin can be used in the present invention. It is, however, preferred to use a solid and/or liquid food-grate lecithin which is commercially available. An example of such a lecithin is Epikuron 100G (Lucas Meyer, D-2000 Hamburg, Germany).

Likewise, any tocopherol can be used in the present invention, with examples of such tocopherols being α-tocopherol, γ-tocopherol or a mixture of natural tocopherols. In a preferred embodiment γ-tocopherol is used.

The lecithin, ascorbyl palmitate and tocopherol are used in a ratio of 6-3:4-2:8-4, especially 3:2:4, and the combined amount thereof incorporated into the silica-treated oil is preferably 1000-4000 parts per million, especially 2000-3500, preferably ca. 2250 or 3000 parts per million. The lecithin, ascorbyl palmitate and tocopherol can be incorporated as a mixture or individually. When a mixture is used, the incorporation is preferably carried out at about 20-90°C. especially about 60°C. When the components are incorporated individually, the lecithin is preferably incorporated at above about 40°C, especially at about 60°C, the ascorbyl palmitate is preferably incorporated at above about 90°C, especially at about 130°C, and the tocopherol is preferably incorporated at above about 20-60°C, especially at about 60°C.

The resulting oil which is even superior in taste and smell is obtained by the additional so-called soft vacuum steam deodorization, namely at a temperature between about 140°C and about 210°C and is carried out before the lecithin, ascorbyl palmitate and tocopherol are incorporated in the silica-treated oil. This additional step can be carried out using conventional equipment and in a batch, semi -batch or continuous operation. Preferably, this step is carried out at between about 150°C and about 170°C, or even about 190°C for about 2 to about 5 hours, especially about 1 to about 4 hours, under a pressure of about 2 to about 10 mbar, especially about 3 to about 5 mbar.

The term "soft" should indicate that this deodorisation step is carried out at temperatures which are (somewhat) lower than the usual deodorization temperatures, and/or at reaction times which are (somewhat) shorter than the usual reaction times used in this process.

The use of the aforementioned steam deodorization permits a reduction in adsorbent levels from 50-20% by weight (adsorbent/oil) to as low as 5%, which is more attractive economically. The latter figure would in fact be 1/4 of the amount used (i.e. 20%) without this additional step.

The stabilized marine oils manufactured in accordance with the invention are useful for incorporation into foodstuffs such as margarines, spreads, mayonnaise and the like and into cosmetic and dietary products, e.g. supplements.
Methods for e.g. refining marine oils are known.

US PS 5 006 281 describes such process. The material process is considerably more involved (Claim 1, Claim 11), and uses very particularly activated columns, and furthermore, antioxidant mixtures being different from the present mixtures, in as far as, inter alia, γ-tocopherol and ascorbyl palmitate are used.

The process of EP 326 829 deals with a particular antioxidant mixture, a mixture which is different from the material composition of the present case, in as far as tocopherol, ascorbic acid and lecithine are used. Furthermore, no refining step is disclosed here.

EP 340 635, though disclosing also an adsorption step for the deodorization of marine oils, using, inter alia, also silica gel, recommends totally different antioxidants, namely preferably Rosemary extract and furthermore, a different sequence of steps, namely preferably first the deodorization step, then the silicid and treatment to achieve the refining of the oils is recommended.

This fact applies also to GB 1522 149, dealing with the purificartion of nutritive glyceride oils,
to EP 304 115 dealing with marine/vegetable oil blends, and makes use of, inter alia, a refining step using a silicate,
to WO 91/10367 dealing with margarine spreads, which can contain ascorbyl palmitate, α-tocopherol and propylgallate as the antioxident mixture,
to US PS 2 464 927 dealing with antioxidant mixtures for oils and fats, and this according to 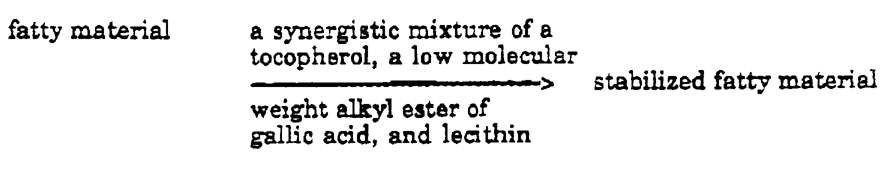
and finally
to GB 558 922 dealing with the refining of fat - soluble vitamin containing oils or concentrates using natural vegetable antioxidant concentrates.

The following Examples illustrate the present invention, but do not limit the scope thereof in any manner. In the Examples the lecithin used was Epikuron 100G.

### Example 1

(a) 100 g of conventionally degummed, neutralized and bleached marine oil containing 18% EPA and 12% DNA were mixed with 50 g of wet Trisyl (60% water content) and heated to 80°C while stirring vigorously under a vacuum, which rapidly reached 70 mbar and gradually increased to 25 mbar over a period of 1 hour when bubbles ceased to evolve from the mixture. The heating was stopped, the vacuum was broken, the mixture was cooled to 40°C and 200 g of hexane were added. The mixture was filtered over a funnel (9 cm diameter; Whatman No. 1 paper during 5 minutes, the filter residue comprising a silica bed was washed with 40 g of hexane and the combined filtrate and washings were evaporated, initially under a low vacuum and then under a high vacuum (1 mbar for 1 hour). There were obtained 94.5 g of a pale yellow odour-free oil having a mild fish taste.
(b) A mixture of lecithin, ascorbyl palmitate and γ-tocopherol in an amount of 750:500:1000 ppm was dissolved in the oil obtained according to (a) by heating at 90°C for 1 hour on a rotary evaporator (25 mbar vacuum) to give the desired stabilized oil.
(c) The oil obtained according to (b) was evaluated for stability on a Rancimat® apparatus (Metrohm Ltd., CH-9101 Herisau, Switzerland) at 100°C. The oil showed an induction time (i.e. the time taken for the oil to reach the onset of rancidity) of 10.1 hours compared with an induction time of 1.5 hours for the oil obtained according to (a).

### Example 2

The procedure described in Example 1 was repeated except that a mixture of lecithin, ascorbyl palmitate and α-tocopherol was used in (b) in an amount of 750:500:1000 ppm. The induction time of the thus-stabilized oil determined on a Rancimat® apparatus at 100°C was 7.1 hours.

### Example 3

The procedure described in Example 1 was repeated except that in (a) the hexane treatment was omitted and the mixture was filtered directly to give 83 g of a pale yellow odour-free oil having a mild fish taste and in (b) a mixture of lecithin, ascorbyl palmitate and α-tocopherol was used in an amount of 750:500:1000 ppm.

Evaluation of the resulting stabilized oil on a Rancimat® apparatus gave an induction time of 8 hours at 100°C.

### Example 4

(a) 100 g of conventionally degummed, neutralized and bleached marine oil containing 18% EPA and 12% DHA were dissolved in 200 g of hexane and 20 g of dry chromatographic grade silica were added. The mixture was stirred for 5 minutes and then filtered, over a No. 2 porosity sintered filter at a flow rate of 1ml/cm²/minute. After washing the silica present on the filter with 40 g of hexane and the combined miscella and washings were evaporated to give 91.4 g of a taste-free and odour-free pale yellow oil.
(b) A mixture of lecithin, ascorbyl palmitate and γ-tocopherol in an amount of 750:500:1000 ppm was dissolved in the oil obtained according to (a) by heating at 90°C for 1 hour on a rotary evaporator (25 mbar vacuum) to give the desired stabilized oil.
(c) The stability of the oil obtained according to (b) was evaluated on a Rancimat® apparatus at 90°C. The oil showed an induction time of 27.7 hours compared with an induction time of 1.5 hours for the oil obtained according to (a).

### Example 5

150 g of deodorized marine oil were mixed with 30 g of silica (GRACE Trisyl SP 2-7887) and the mixture was heated to 80°C for 2 hours at about 30 mbar on a rotary evaporator. The suspension was then cooled to room temperature and 300 g of hexane were added. The mixture was stirred for 1.5 hours and filtered. The hexane was removed from the mixture on a rotary evaporator to yield 146.6 g of a clear yellow oil with a slightly fishy taste and smell.

140 ml of this oil were "soft" deodorized at 155 °C under 5 mbar for 2.5 hours and then cooled to room temperature. The deodorized oil was free from the taste and smell of fish. 750 ppm of lecithin, 1000 ppm of α-tocopherol and 500 ppm of ascorbyl palmitate were added at 60°C.

The Rancimat induction time (100°C, 20 l air/hour) recorded for this oil was 9.25 hours compared with 6.4 hours for the silica-treated oil without the soft deodorization step, but stabilized in the same manner.

### Example 6

200 g of deodorized marine oil were mixed with 40 g of silica (GRACE Trisyl SP 2-7915) and the mixture was heated to 80°C for 2 hours at about 30 mbar on a rotary evaporator. The suspension was then cooled to room temperature and 400 g of hexane were added. The mixture was stirred for 1.5 hours and filtered. The hexane was removed from the mixture on a rotary evaporator to yield 165.2 g of a clear yellow oil with a slightly fishy taste and smell.

127 ml of this oil were "soft" deodorized at 155 °C under 5 mbar for 2.5 hours and then cooled to room temperature. The deodorized oil was free from the taste and smell of fish. 750 ppm of lecithin, 1000 ppm of α-tocopherol and 500 ppm of ascorbyl palmitate were added at 60°C.

The Rancimat induction time (100°C 20 l air/hour) recorded for this oil was 4.9 hours compared with 3.4 hours for the silica treated oil stabilized in the same manner.

### Example 7

200 g of deodorized marine oil were mixed with 40 g of silica (GRACE Trisyl SP 2-7915) and the mixture was heated to 80°C for 2 hours at about 30 mbar on a rotary evaporator. The suspension was then cooled to room temperature within 1.5 hours and filtered to yield 165. g of a clear yellow oil with a slightly fishy taste and smell.

125 ml of this oil were "soft" deodorized at 155 °C under 5 mbar for 2.5 hours and then cooled to room temperature. The deodorized oil was free from the taste and smell of fish. 750 ppm of lecithin, 1000 ppm of α-tocopherol and 500 ppm of ascorbyl palmitate were added at 60°C.

The Rancimat induction time (100°C, 20 l air/hour) recorded for this oil was 5.2 hours compared with 4.5 hours for the silica treated oil without the soft deodorization step, but stabilized in the same manner.

### Example 8

1.582 g of deodorized marine oil were mixed with 79 g of silica (GRACE Trisyl SP 2-8998) and the mixture was heated to 80°C for 2 hours at about 30 mbar on a rotary evaporator. 31 6 g of activated carbon (Norit CA1) were added and the mixture was heated for a further hour under a vacuum of 30 mbar. After cooling, the mixture was filtered to yield a clear yellow oil with an unpleasant taste and smell; neither of which could be described as fishy.

500 ml of this oil were "soft" deodorized at 190°C for 2 hours at 4 mbar and then cooled to room temperature. The deodorized oil was free from the taste and smell of fish. 750 ppm of lecithin, 1000 ppm of α-tocopherol and 500 ppm of ascorbyl palmitate were added at 60°C.

The Rancimat induction time (90°C; 20 l air/hour) recorded for this oil was 11 hours, compared with 7 hours for the oil prior to the final deodorization and 0.5 hour for the oil used as the starting material.

## Claims

1. A process for the stabilization of fully or partially refined marine oil by means of lecithin, ascorbyl palmitate and a tocopherol and involving a silica treatment, comprising treating said oil with silica having a surface area greater than 500 m² per gram, subjecting said silica treated oil to a soft vacuum steam deodorization at a temperature between about 140°C and about 210°C, and incorporating a lecithin, ascorbyl palmitate and a tocopherol in the ratio of 6-3 : 4-2 : 8-4 in the thus-treated oil, whereby the stabilization brought about lasts for several months.

2. A process according to claim 1, wherein fully refined marine oil is used.

3. A process according to claim 1 or claim 2, wherein the silica is dried or substantially freed from water before or during the process.

4. A process according to any one of claims 1 to 3, wherein the silica treatment is carried out by contacting the oil with the silica in a column or stirred reactor vessel or a combination thereof.

5. A process according to any one of claims 1 to 4, wherein the silica treatment is carried out by passing an oil/solvent miscella through silica in a column or stirred reactor vessel or a combination thereof, filtering and subsequently removing the solvent.

6. A process according to claim 5, wherein the solvent is a food grade approved apolar solvent.

7. A process according to claim 6, wherein said solvent is a hydrocarbon.

8. A process according to claim 7, wherein said hydrocarbon is hexane.

9. A process according to any one of claims 1 to 8, wherein the treatment with silica is carried out in the presence of carbon.

10. A process according to claim 9, wherein the carbon is dried or substantially freed from water before or during the process.

11. A process according to claim 9 or claim 10, wherein a carbon having a surface area greater than 1100 m² per gram is used.

12. A process according to claim 1, wherein the ratio of lecithin, ascorbyl palmitate and tocopherol is 3:2:4.

13. A process according to any one of claims 1 to 12, wherein the combined amount of lecithin, ascorbyl palmitate and tocopherol incorporated in the silica-treated oil is 1000-4000 parts per million.

14. A process according to claim 13, wherein the combined amount is 2250 parts per million.

15. A process according to any one or claims 1 to 14, wherein the lecithin, ascorbyl palmitate and tocopherol are incorporated as a mixture.

16. A process according to claim 15, wherein the incorporation is carried out at about 20-90°C.

17. A process according to claim 16, wherein the incorporation is carried out at about 60°C.

18. A process according to any one or claims 1 to 14, wherein the lecithin, ascorbyl palmitate and tocopherol are incorporated separately.

19. A process according to claim 18, wherein the lecithin is incorporated at above about 40°C.

20. A process according to claim 19, wherein the lecithin is incorporated at about 60°C.

21. A process according to any one of claims 18 to 20, wherein the ascorbyl palmitate is incorporated at above about 90°C.

22. A process according to claims 21, wherein the ascorbyl palmitate is incorporated at about 130°C.

23. A process according to any one of claims 18 to 22, wherein the tocopherol is incorporated at about 20-60°C.

24. A process according to claim 23, wherein the tocopherol is incorporated at about 60° C.

25. A process according to any one of claims 1 to 24, wherein the temperature of the deodorization is about 150°C to about 170°C.

26. A process according to claim 25, wherein the deodorization is carried out for about 2 to about 5 hours.

27. A process according to claim 26, wherein the deodorization is carried out for about 1 to about 4 hours.

28. A process according to any one of claims 25 to 27, wherein the pressure is about 2 to about 10 mbar.

29. A process according to claim 28, wherein the pressure is about 3 to about 5 mbar.

30. A marine oil stabilized according to the process claimed in any one of claims 1 to 29.

## Patentansprüche

1. Verfahren zur Stabilisierung von vollständig oder teilweise raffiniertem Fischöl mittels Lecithin, Ascorbylpalmitat und einem Tocopherol und Durchführung einer Kieselsäurebehandlung, enthaltend die Behandlung des genannten Öls mit Kieselsäure mit einer Oberfläche von grösser als 500 m² pro Gramm, das Unterwerfen des genannten mit Kieselsäure behandelten Öls einer milden Vakuumdampfdesodorierung bei einer Temperatur zwischen etwa 140°C und etwa 210°C und den Zusatz zum so behandelten Öl eines Lecithins, Ascorbylpalmitat und eines Tocopherols im Verhältnis von 6-3 : 4-2 : 8-4, wobei die erreichte Stabilisierung mehrere Monate beträgt.

2. Verfahren nach Anspruch 1, worin vollständig raffiniertes Fischöl verwendet wird.

3. Verfahren nach Anspruch 1 oder Anspruch 2, worin die Kieselsäure vor oder während des Verfahrens getrocknet oder im wesentlichen von Wasser befreit wird.

4. Verfahren nach einem der Ansprüche 1 bis 3, worin die Kieselsäurebehandlung durchgeführt wird, indem man das Öl mit der Kieselsäure in einer Kolonne oder einem gerührten Reaktionskessel oder einer Kombination davon in Kontakt bringt.

5. Verfahren nach einem der Ansprüche 1 bis 4, worin die Kieselsäurebehandlung durchgeführt wird, indem man eine Öl/Lösungsmittel-Mischung durch Kieselsäure in einer Kolonne oder einem gerührten Reaktionskessel oder einer Kombination davon leitet, filtriert und anschliessend das Lösungsmittel entfernt.

6. Verfahren nach Anspruch 5, worin das Lösungsmittel ein zugelassenes nahrungsmittelgeeignetes apolares Lösungsmittel ist.

7. Verfahren nach Anspruch 6, worin das genannte Lösungsmittel ein Kohlenwasserstoff ist.

8. Verfahren nach Anspruch 7, worin der genannte Kohlenwasserstoff Hexan ist.

9. Verfahren nach einem der Ansprüche 1 bis 8, worin die Behandlung mit Kieselsäure in Gegenwart von Kohlenstoff durchgeführt wird.

10. Verfahren nach Anspruch 9, worin der Kohlenstoff vor oder während des Verfahrens getrocknet oder im wesentlichen von Wasser befreit wird.

11. Verfahren nach Anspruch 9 oder Anspruch 10, worin ein Kohlenstoff mit einer Oberfläche von grösser als 1100m² pro Gramm verwendet wird.

12. Verfahren nach Anspruch 1, worin das Verhältnis von Lecithin, Ascorbylpalmitat und Tocopherol 3:2:4 beträgt.

13. Verfahren nach einem der Ansprüche 1 bis 12, worin die Gesamtmenge von Lecithin, Ascorbylpalmitat und Tocopherol, die dem mit Kieselsäure behandelten Öl zugesetzt wird, 1000-4000 Teile pro Million beträgt.

14. Verfahren nach Anspruch 13, worin die Gesamtmenge 2250 Teile pro Million beträgt.

15. Verfahren nach einem der Ansprüche 1 bis 14, worin das Lecithin, Ascorbylpalmitat und Tocopherol als Mischung zugesetzt werden.

16. Verfahren nach Anspruch 15, worin der Zusatz bei etwa 20-90°C vorgenommen wird.

17. Verfahren nach Anspruch 16, worin der Zusatz bei etwa 60°C vorgenommen wird.

18. Verfahren nach einem der Ansprüche 1 bis 14, worin das Lecithin, Ascorbylpalmitat und Tocopherol getrennt zugesetzt werden.

19. Verfahren nach Anspruch 18, worin das Lecithin oberhalb von etwa 40°C zugesetzt wird.

20. Verfahren nach Anspruch 19, worin das Lecithin bei etwa 60°C zugesetzt wird.

21. Verfahren nach einem der Ansprüche 18 bis 20, worin das Ascorbylpalmitat oberhalb von etwa 90°C zugesetzt wird.

22. Verfahren nach Anspruch 21, worin das Ascorbylpalmitat bei etwa 130°C zugesetzt wird.

23. Verfahren nach einem der Ansprüche 18 bis 22, worin das Tocopherol bei etwa 20-60°C zugesetzt wird.

24. Verfahren nach Anspruch 23, worin das Tocopherol bei etwa 60°C zugesetzt wird.

25. Verfahren nach einem der Ansprüche 1 bis 24, worin die Temperatur der Desodorierung etwa 150°C bis etwa 170°C beträgt.

26. Verfahren nach Anspruch 25, worin die Desodorierung während etwa 2 bis etwa 5 Stunden durchgeführt wird.

27. Verfahren nach Anspruch 26, worin die Desodorierung während etwa 1 bis etwa 4 Stunden durchgeführt wird.

28. Verfahren nach einem der Ansprüche 25 bis 27, worin der Druck etwa 2 bis etwa 10 mbar beträgt.

29. Verfahren nach Anspruch 28, worin der Druck etwa 3 bis etwa 5 mbar beträgt.

30. Fischöl, stabilisiert gemäss dem in irgendeinem der Ansprüche 1 bis 29 beanspruchten Verfahren.

## Revendications

1. Un procédé pour la stabilisation des huiles marines complètement ou partiellement raffinées au moyen de lécithine, de palmitate d'ascorbyle et d'un tocophérol et impliquant un traitement à la silice dans lequel on traite ladite huile avec une silice présentant une surface spécifique supérieure à 500 m²/g, puis l'on soumet ladite huile traitée à la silice à une désodorisation à la vapeur sous vide modéré à une température entre 140°C et environ 210°C après quoi on incorpore une lécithine, du palmitate d'ascorbyle et un tocophérol dans le rapport de 6-3:4-2:8-4 dans l'huile ainsi traitée, de façon à lui conférer une stabilisation pendant environ l'espace de plusieurs mois.

2. Un procédé selon la revendication 1, dans lequel de l'huile marine complètement raffinée est utilisée.

3. Un procédé selon la revendication 1 ou la revendication 2, dans lequel la silice est séchée ou pratiquement exempte d'eau avant ou pendant le procédé.

4. Un procédé selon l'une quelconque des revendications 1 à 3, dans lequel le traitement à la silice est mis en oeuvre en mettant en contact l'huile avec la silice dans une colonne ou un récipient de réaction agité ou bien une combinaison de ceux-ci.

5. Un procédé selon l'une quelconque des revendications 1 à 4, dans lequel le traitement à la silice est mis en oeuvre en transférant une émulsion huile/solvant à travers la silice dans une colonne ou un récipient de réaction sous agitation ou bien une combinaison de ceux-ci, après quoi on filtre puis on élimine le solvant.

6. Un procédé selon la revendication 5, dans lequel le solvant est un solvant apolaire homologué de qualité alimentaire.

7. Un procédé selon la revendication 6, dans lequel ledit solvant est un hydrocarbure.

8. Un procédé selon la revendication 7, dans lequel ledit hydrocarbure est l'hexane.

9. Un procédé selon l'une quelconque des revendications 1 à 8, dans lequel le traitement avec la silice est mis en oeuvre en présence de carbone.

10. Un procédé selon la revendication 9, dans lequel le carbone est séché ou pratiquement exempt d'eau avant ou pendant le procédé.

11. Un procédé selon la revendication 9 ou la revendication 10, dans lequel un carbone présentant une surface spécifique supérieure à 1100 m²/g est utilisé.

12. Un procédé selon la revendication 1, dans lequel le rapport entre la lécithine, le palmitate d'ascorbyle et le tocophérol est de 3:2:4.

13. Un procédé selon l'une quelconque des revendications 1 à 12, dans lequel la quantité combinée de lécithine, de palmitate d'ascorbyle et de tocophérol incorporée dans l'huile traitée à la silice est de 1000 à 4000 parties par million.

14. Un procédé selon la revendication 13, dans lequel la quantité combinée est de 2250 parties par million.

15. Un procédé selon l'une quelconque des revendications 1 à 14, dans lequel la lécithine, le palmitate d'ascorbyle et le tocophérol sont incorporés sous forme de mélange.

16. Un procédé selon la revendication 15, dans lequel l'incorporation est mise en oeuvre à environ 20-90°C.

17. Un procédé selon la revendication 16, dans lequel l'incorporation est mise en oeuvre à environ 60°C.

18. Un procédé selon l'une quelconque des revendications 1 à 14, dans lequel la lécithine, le palmitate d'ascorbyle et le tocophérol sont incorporés séparément.

19. Un procédé selon la revendication 18, dans lequel la lécithine est incorporée au-dessus d'environ 40°C.

20. Un procédé selon la revendication 19, dans lequel la lécithine est incorporée à environ 60°C.

21. Un procédé selon l'une quelconque des revendications 18 à 20, dans lequel le palmitate d'ascorbyle est incorporé au-dessus d'environ 90°C.

22. Un procédé selon la revendication 21, dans lequel le palmitate d'ascorbyle est incorporé à environ 130°C.

23. Un procédé selon l'une quelconque des revendications 18 à 22, dans lequel le tocophérol est incorporé à environ 20-60°C.

24. Un procédé selon la revendication 23, dans lequel le tocophérol est incorporé à environ 60°C.

25. Un procédé selon l'une quelconque des revendications 1 à 24, dans lequel la température de la désodorisation est d'environ 150°C à 170°C.

26. Un procédé selon la revendication 25, dans lequel la désodorisation est mise en oeuvre pendant environ 2 à environ 5 heures.

27. Un procédé selon la revendication 26, dans lequel la désodorisation est mise en oeuvre pendant environ 1 à environ 4 heures.

28. Un procédé selon l'une quelconque des revendications 25 à 27, dans lequel la pression est d'environ 2 à environ 10 mbar.

29. Un procédé selon la revendication 28, dans lequel la pression est d'environ 3 à environ 5 mbar.

30. Une huile marine stabilisée selon le procédé revendiqué dans l'une quelconque des revendications 1 à 29.
